# EUROPEAN PATENT SPECIFICATION

(11) **EP 4 275 871 B1**
(45) Date of publication and mention of the grant of the patent: **22.10.2025**
(21) Application number: 23170303.4
(22) Date of filing: 27.04.2023
(51) Int. Cl.: B29C 65/20, B29C 65/00, B29C 65/78

(54) **CONTAINER FOR HEATING PLATES FOR BUTT WELDING PIPES**
BEHÄLTER FÜR HEIZPLATTEN ZUM STUMPFSCHWEISSEN VON ROHREN
RÉCIPIENT POUR PLAQUES CHAUFFANTES POUR LE SOUDAGE BOUT À BOUT DE TUYAUX

(30) Priority: 13.05.2022 IT 202200009908
(43) Date of publication of application: 15.11.2023
(73) Proprietor: RITMO S.p.A., 35037 Teolo (Padova) (IT)
(72) Inventor: BORTOLI, RENZO, 35036 MONTEGROTTO TERME (PADOVA) (IT); APOLINARI, ALESSANDRO, 35030 CERVARESE SANTA CROCE (Padova) (IT)
(74) Representative: Forattini, Amelia

(56) References cited:
- EP-A1- 2 829 382
- KR-B1- 101 238 813
- US-A1- 2015 156 821

## Description

The present invention relates to a container for heating plates for butt welding pipes.

As is known, pipes made of plastic material, typically polyethylene and polypropylene, are widely used in the making of ducts for conveying fluids.

The plastic elements, pipes and fittings, are butt-welded together by using adapted welding apparatuses.

US2015/156821A1 discloses a heating element for a plastic-tube butt-welding machine having a plate-type radiator in which at least one electric heat source is integrated. The plate-type radiator includes a metallic foam structure in which at least one electric heat source is embedded in a heat-conducting manner.

EP2829382A1 discloses a heating device for the plastification of workpieces made of a thermoplastic material, having a heating element, in the form of a heating plate or blade provided with cavities in each of which a heating element is inserted; the radiator is designed as a sandwich body which has a metal foam layer which is covered with a solid metal layer on a side surface; each cavity is formed in the metal foam layer.

KR101238813B1 discloses a heat-sealing heater that is not scratched or damaged by edges, reducing the breakage rate of the hot plate part, increasing the work rate according to the decrease in the breakage rate, reducing equipment maintenance and repair costs, and making equipment replacement easy. The heater addresses the problem of when the thermal fusion heater is taken out from the storage case, and the rim is supported on the upper edge of the storage case so that the contact surface is formed at the upper end by protruding outward from the contact surface, wherein the contact surface to which the connection surfaces of the synthetic resin tubes are contacted.

The conventional apparatuses known in the art are generally provided with clamps configured to lock the end portions of the tubular elements to be welded and to bring the heads of the tubular elements into contact, after flattening and heating them with adapted heating plates.

During the welding process, the preheated heating plate is inserted between the elements to be welded for a time sufficient to melt the ends of the elements.

When a ring of melted material of a predetermined width appears on the ends to be welded and the heating time prescribed by the welding standard used has elapsed, the heating plate is removed and the two surfaces to be welded are brought into mutual contact by moving the clamps closer together again.

The heating plate, when not in use, is generally stored in a metal container which is open on the top and is basically constituted by a bottom wall and by side walls, which are joined together.

A so-called stack effect is created in the container and can produce an upward motion of the hot air, and this entails a considerable heat loss, which clearly effects power consumption.

This electric power consumption reaches significant amounts in the long term, because the heating plate has prolonged periods of inactivity during which it remains constantly on, in order to maintain the optimal temperature for use.

Moreover, it should be considered that the hot air that rises from the container affects the electrical connection box and the handles of the heating plate, with the risk of causing serious damage to the point of rendering the heating plate unusable.

The aim of the present invention is to provide a container for heating plates for butt welding pipes that overcomes the drawbacks of the cited prior art.

Within the scope of this aim, a particular object of the invention is to provide a container for heating plates that allows to reduce energy consumption, with consequent lower operating costs of the heating plate.

A further object of the invention is to provide a container for heating plates that is safe and mechanically tough.

A further object of the invention is to provide a container for heating plates that is structurally simple yet functionally very efficient.

A further object of the invention is to provide a container for heating plates that is easy to use and can be manufactured at relatively low cost.

This aim and these objects, as well as others which will become better apparent hereinafter, are achieved by a container for heating plates for butt welding pipes, as claimed in the appended claims.

Further characteristics and advantages will become better apparent from the description of a preferred but not exclusive embodiment of a container for heating plates according to the invention, illustrated by way of non-limiting example in the accompanying drawings, wherein:
Figure 1 is a perspective view of a container for heating plates according to the invention, shown in a closed configuration and surrounding a heating plate;
Figure 2 is a perspective view of the container for heating plates according to the invention, shown in an open configuration, wherein the operations for insertion/extraction of the heating plate are easier;
Figure 3 is a perspective view of the container for heating plates according to the invention, in the open configuration, during the operations of insertion/extraction of the heating plate;
Figure 4 is a side view of the container for heating plates according to the invention, shown in the closed configuration and surrounding the heating plate;
Figure 5 is a side view of the container for heating plates according to the invention, in the open configuration, during the operations of insertion/extraction of the heating plate.

With reference to the cited figures, a container for heating plates for butt welding pipes is generally designated by the reference numeral 1.

The container 1 includes one or more walls 2 forming a receptacle 3 adapted to contain a heating plate 50, which generally has a substantially disk-like shape.

Advantageously, the heating plate 50 can be inserted/extracted into/from the receptacle 3 through an elongated opening 4 which is preferably extended over the upper part of the container 1.

In the example shown and described herein, the container 1 is substantially shaped as a parallelepiped and includes two portions, respectively 5a and 5b, coupled to each other so as to jointly form the receptacle 3 and also the opening 4.

While one of the two portions 5a and 5b, for example the portion 5a, is fixed and integral with a base 6, the other portion, for example the portion 5b, is coupled to the base 6 by a hinge means 7 that allows it to open and close in a clamshell manner.

The portion 5b is thus movable between an open configuration, in which it is spaced from the portion 5a to facilitate the operations for insertion/extraction of the heating plate 50 into/from the receptacle 3, and a closed configuration, in which it is adjacent to the portion 5a to complete the receptacle 3, so as to surround the heating plate 50.

According to the invention, the container 1 also includes an elastic return means 8 adapted to keep the portion 5b in the open configuration, or in the closed configuration, unless a pushing action is exerted on it from the outside.

For example, the elastic return means 8 is constituted by a pair of springs having one end anchored to the base 6 and the other end anchored to the portion 5b.

An abutment element 9, integral with the base 6, limits the movement of the portion 5b and thus determines its fully open position.

Advantageously, the container 1 may also include a clamping device, not shown in the figures, which can be switched between a locking mode, in which it prevents the portion 5b from moving from the closed configuration to the open configuration, and a release mode, in which the portion 5b is instead free to move.

According to alternative embodiments, not shown in the figures, the container according to the invention is formed monolithically, or in any case has substantially no movable portions. The container may also be integral with other containers designed to contain additional tools commonly used in the field of butt welding, such as a milling tool for flattening pipe heads.

According to the present invention, the container 1 includes an insulation means surrounding the receptacle 3 so as to thermally insulate the receptacle 3 from the surrounding environment and keep constant the temperature of the heating plate 50 contained therein.

In the example shown and described herein, the insulation means includes appropriately sized solid insulating panels 20a, 20b and 20c, that reproduce the negative outer shape of the heating plate 50 and cover the inner surface of the walls 2, ensuring that there is no heat exchange between the interior and the exterior of the receptacle 1.

The panels 20a, 20b and 20c can be made, for example, of rock wool or high-density glass wool, or of another specific thermally insulating material.

According to alternative embodiments, not shown in the figures, the insulation means that insulate the receptacle 3 is arranged on the outer surface of the walls 2 or is for example constituted by a loose insulating material, confined between containment elements.

According to a further aspect of the invention, the container according to the invention is used in conjunction with an apparatus for butt welding pipes, which is not shown in the figures since it is per se known.

The apparatus generally includes a first clamp assembly and a second clamp assembly, that respectively engage first and second tubular elements, to be joined by welding.

A device for milling the ends of the first and second tubular elements and a heating plate 50 for welding the ends, provided with a corresponding container 1, are also associated in a fixed or removable manner with the apparatus.

The use of the container according to the invention is substantially as follows.

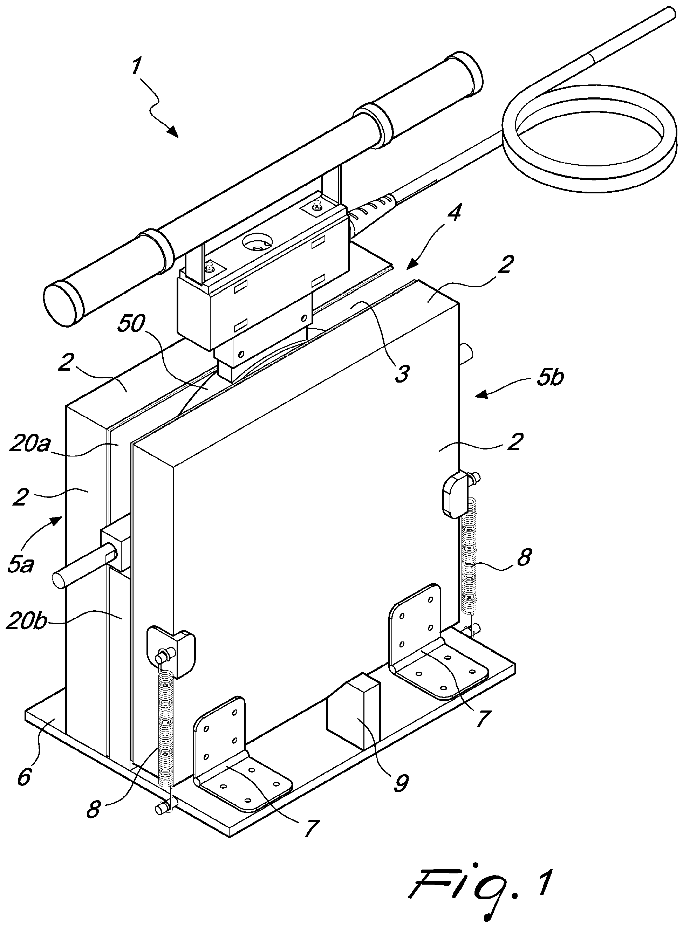

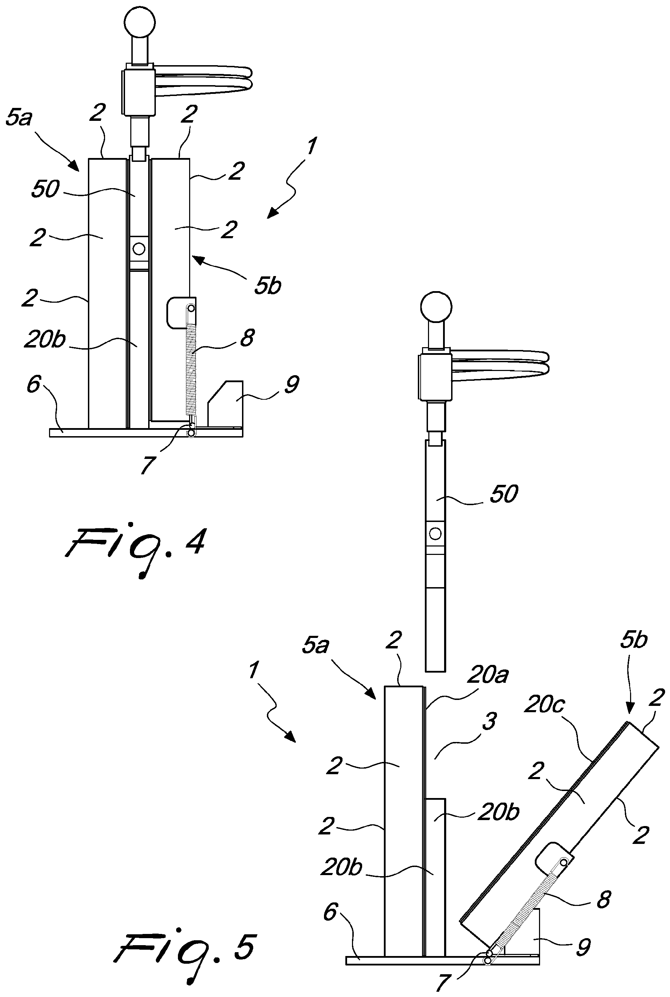

For example, if the heating plate 50 is not to be used temporarily or in any case for a certain period of time during which no welds are performed, it is stored in the container 1, which surrounds it almost completely, as substantially shown in Figures 1 and 4.

In this way, heat exchanges between the heating plate 50 and the surrounding environment are minimized.

Therefore, by using the container 1, the thermal energy required to heat the heating plate 50, and to maintain a substantially constant temperature value, will be less than that which would be required if a conventional type of container were used; this entails considerable energy saving.

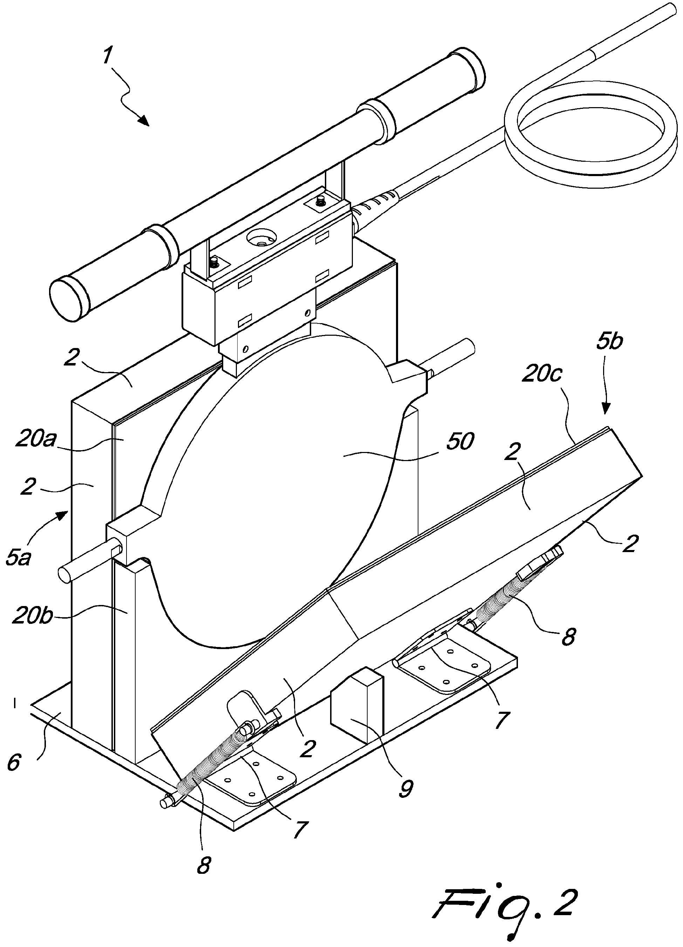

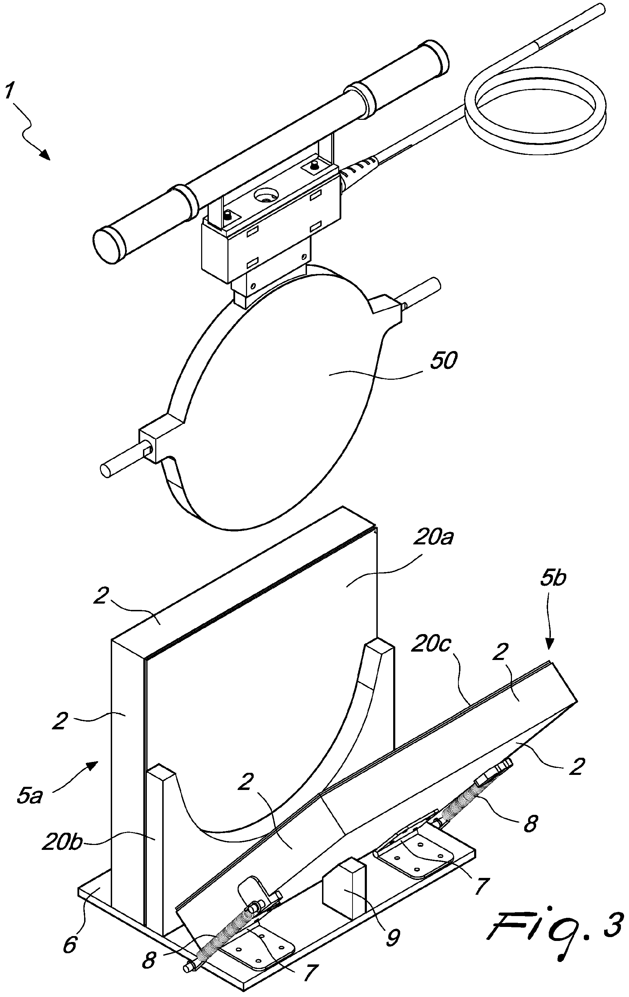

When welding is to be performed, the heating plate 50 is removed from the container 1 and, in order to facilitate this operation, the portion 5b is opened, as substantially shown in Figures 2, 3 and 5.

In practice it has been found that the invention achieves the intended aim and objects, providing a container, for heating plates for butt welding pipes, that reduces energy consumption by avoiding heat losses and consequently decreases the operating costs of the heating plate.

Experimental tests carried out by this applicant, and a careful analysis of the results, have shown that, when the heating plate is turned on and contained in the container according to the invention, for example while waiting to perform a weld, there is a primary energy saving of approximately 70% with respect to the systems adopted so far.

Even taking into consideration the more realistic case in which the heating plate is removed from the container according to the invention several times to perform welds, statistically there is still an energy saving that varies between about 40% and 60%.

The container according to the present invention has therefore been found to be more advantageous from an economic standpoint than conventional containers, besides being a sustainable solution in terms of energy.

Moreover, it should be considered that, by confining the heat produced by the heating plate inside the container according to the invention, there is also the advantage of preventing the electrical connection box and the handles of the heating plate from being struck by the hot air, as would instead occur in a conventional container.

A further advantage of the container according to the invention is that it has a relatively simple structure and can be manufactured at low production costs; nevertheless, the container for heating plates according to the invention is mechanically tough and safe.

## Claims

1. A container for heating plates for butt welding pipes, comprising walls (2) forming at least one receptacle (3) for containing a heating plate (50); an insulation means surrounding said receptacle (3) and adapted to thermally insulate said receptacle (3) from the surrounding environment; said walls (2) having at least one opening (4) allowing the insertion/extraction of said heating plate (50) into/from said receptacle (3); at least two portions (5a, 5b) forming said receptacle (3) and said opening (4); said container being **characterized in that** it comprises an elastic return means (8) interacting with at least one of said two portions (5a, 5b), facilitating a transition from said open configuration to said closed configuration and vice versa.

2. The container for heating plates, according to claim 1, **characterized in that** said insulation means is associated with the internal surface of said walls (2).

3. The container for heating plates, according to one or more of the preceding claims, **characterized in that** said insulation means is associated with the outer surface of said walls (2).

4. The container for heating plates, according to one or more of the preceding claims, **characterized in that** said insulation means comprises panels (20a, 20b and 20c) made of solid insulating material which substantially reproduce the negative outer shape of said heating plate (50) and cover said walls (2).

5. A container for heating plates, according to one or more of the preceding claims, **characterized in that** said insulation means comprises loose insulating material confined between said walls (2) and containment elements associated therewith.

6. The container for heating plates, according to one or more of the preceding claims, **characterized in that** at least one of said two portions (5a, 5b) is movable between an open configuration, wherein said portions (5a, 5b) are mutually spaced apart, and a closed configuration, wherein said portions (5a, 5b) are closed onto each other.

7. The container for heating plates, according to one or more of the preceding claims, **characterized in that** it comprises hinge means (7) adapted to allow a rotation of at least one of said two portions (5a, 5b) with respect to the other portion.

8. The container for heating plates, according to one or more of the preceding claims, **characterized in that** it comprises a clamping device which is switchable between a locking mode, in which transition from said closed configuration to said open configuration of said container is prevented, and a release mode, in which the transition from said closed configuration to said open configuration of said container and vice versa is allowed.

9. The container for heating plates, according to one or more of the preceding claims, **characterized in that** it is integral with other containers and/or supports.

10. An apparatus for butt welding pipes, comprising a first clamp assembly and a second clamp assembly, that engage respectively a first tubular element and a second tubular element to be joined by welding; a device for milling the ends of said first and second tubular elements and a heating plate (50) for welding said ends being associated or associable with said welding apparatus; said welding apparatus being **characterized in that** it comprises at least one container (1) for heating plates for butt welding pipes according to one ore more of the preceding claims.

## Patentansprüche

1. Ein Behälter für Heizplatten zum Stumpfschweißen von Rohren, der Wände (2) umfasst, die mindestens eine Aussparung (3) zur Aufnahme einer Heizplatte (50) bilden; ein Isoliermittel, das die Aussparung (3) umgibt und ausgebildet ist, um die Aussparung (3) thermisch gegenüber der Umgebung zu isolieren; wobei die Wände (2) mindestens eine Öffnung (4) haben, die das Einführen/Herausziehen der Heizplatte (50) in die/aus der Aussparung (3) ermöglicht; wobei mindestens zwei Abschnitte (5a, 5b) die Aussparung (3) und die Öffnung (4) bilden; wobei der Behälter **dadurch gekennzeichnet ist, dass** er ein elastisches Rückstellmittel (8) umfasst, welches mit mindestens einem der zwei Abschnitte (5a, 5b) zusammenwirkt und so einen Übergang aus der offenen Konfiguration in die geschlossene Konfiguration und umgekehrt erleichtert.

2. Der Behälter für Heizplatten gemäß Anspruch 1, **dadurch gekennzeichnet, dass** das Isoliermittel mit der Innenfläche der Wände (2) verbunden ist.

3. Der Behälter für Heizplatten gemäß einem oder mehreren der obigen Ansprüche, **dadurch gekennzeichnet, dass** das Isoliermittel mit der Außenfläche der Wände (2) verbunden ist.

4. Der Behälter für Heizplatten gemäß einem oder mehreren der obigen Ansprüche, **dadurch gekennzeichnet, dass** das Isoliermittel Platten (20a, 20b und 20c) aus festem Isoliermaterial umfasst, welche die negative äußere Form der Heizplatte (50) im Wesentlichen reproduzieren und die Wände (2) bedecken.

5. Ein Behälter für Heizplatten gemäß einem oder mehreren der obigen Ansprüche, **dadurch gekennzeichnet, dass** das Isoliermittel loses Isoliermaterial umfasst, welches zwischen den Wänden (2) und damit verbundenen Behälterelementen eingeschlossen ist.

6. Der Behälter für Heizplatten gemäß einem oder mehreren der obigen Ansprüche, **dadurch gekennzeichnet, dass** mindestens einer der zwei Abschnitte (5a, 5b) zwischen einer offenen Konfiguration, in der die Abschnitte (5a, 5b) voneinander beabstandet sind, und einer geschlossenen Konfiguration beweglich ist, in welcher die Abschnitte (5a, 5b) miteinander verbunden sind.

7. Der Behälter für Heizplatten gemäß einem oder mehreren der obigen Ansprüche, **dadurch gekennzeichnet, dass** er Scharniermittel (7) umfasst, ausgebildet, um eine Drehung mindestens eines der zwei Abschnitte (5a, 5b) mit Bezug auf den anderen Abschnitt zu gestatten.

8. Der Behälter für Heizplatten gemäß einem oder mehreren der obigen Ansprüche, **dadurch gekennzeichnet, dass** er eine Klemmvorrichtung umfasst, die zwischen einem Verriegelungsmodus, in dem der Übergang von der geschlossenen Konfiguration in die offene Konfiguration des Behälters verhindert wird, und einem Freigabemodus umschaltbar ist, in welchem der Übergang von der geschlossenen Konfiguration in die offene Konfiguration des Behälters und umgekehrt ermöglicht ist.

9. Der Behälter für Heizplatten gemäß einem oder mehreren der obigen Ansprüche, **dadurch gekennzeichnet, dass** er integral mit anderen Behältern und/oder Trägern ist.

10. Eine Vorrichtung zum Stumpfschweißen von Rohren,
die einen ersten Klemmaufbau und einen zweiten Klemmaufbau umfasst, welche ein erstes rohrförmiges Element beziehungsweise ein zweites rohrförmiges Element halten, die durch Schweißen verbunden werden sollen; wobei eine Vorrichtung zum Fräsen der Enden des ersten und des zweiten rohrförmigen Elements und eine Heizplatte (50) zum Verschweißen der Enden mit der Schweißvorrichtung verbunden oder verbindbar sind; wobei die Schweißvorrichtung **dadurch gekennzeichnet ist, dass** sie mindestens einen Behälter (1) für Heizplatten zum Stumpfschweißen von Rohren gemäß einem oder mehreren der obigen Ansprüche umfasst.

## Revendications

1. Récipient pour plaques chauffantes destinées au soudage bout à bout de tuyaux, comprenant des parois (2) formant au moins un réceptacle (3) destiné à contenir une plaque chauffante (50) ; un moyen d'isolation entourant ledit réceptacle (3) et adapté pour isoler thermiquement ledit réceptacle (3) de l'environnement environnant ; lesdites parois (2) comportant au moins une ouverture (4) permettant l'insertion/l'extraction de ladite plaque chauffante (50) dans/hors dudit réceptacle (3) ; au moins deux parties (5a, 5b) formant ledit réceptacle (3) et ladite ouverture (4) ; ledit récipient étant **caractérisé en ce qu'**il comprend un moyen de rappel élastique (8) interagissant avec au moins l'une desdites deux parties (5a, 5b), facilitant une transition de ladite configuration ouverte à ladite configuration fermée et vice versa.

2. Le récipient pour plaques chauffantes, selon la revendication 1, **caractérisé en ce que** ledit moyen d'isolation est associé à la surface interne desdites parois (2).

3. Le récipient pour plaques chauffantes, selon une ou plusieurs des revendications précédentes, **caractérisé en ce que** ledit moyen d'isolation est associé à la surface externe desdites parois (2).

4. Le récipient pour plaques chauffantes, selon une ou plusieurs des revendications précédentes, **caractérisé en ce que** ledit moyen d'isolation comprend des panneaux (20a, 20b et 20c) en matériau isolant solide qui reproduisent sensiblement la forme extérieure négative de ladite plaque chauffante (50) et recouvrent lesdites parois (2).

5. Récipient pour plaques chauffantes, selon une ou plusieurs des revendications précédentes, **caractérisé en ce que** ledit moyen d'isolation comprend un matériau isolant en vrac confiné entre lesdites parois (2) et des éléments de confinement associés à celles-ci.

6. Récipient pour plaques chauffantes, selon une ou plusieurs des revendications précédentes, **caractérisé en ce qu'**au moins l'une desdites deux parties (5a, 5b) est mobile entre une configuration ouverte, dans laquelle lesdites parties (5a, 5b) sont mutuellement espacées, et une configuration fermée, dans laquelle lesdites parties (5a, 5b) sont fermées l'une sur l'autre.

7. Le récipient pour plaques chauffantes, selon une ou plusieurs des revendications précédentes, **caractérisé en ce qu'**il comprend des moyens de charnière (7) adaptés pour permettre une rotation d'au moins l'une desdites deux parties (5a, 5b) par rapport à l'autre partie.

8. Le récipient pour plaques chauffantes, selon une ou plusieurs des revendications précédentes, **caractérisé en ce qu'**il comprend un dispositif de serrage qui peut être commuté entre un mode de verrouillage, dans lequel la transition de ladite configuration fermée à ladite configuration ouverte dudit récipient est empêchée, et un mode de déverrouillage, dans lequel la transition de ladite configuration fermée à ladite configuration ouverte dudit récipient et vice versa est autorisée.

9. Le récipient pour plaques chauffantes, selon une ou plusieurs des revendications précédentes, **caractérisé en ce qu'**il est solidaire d'autres récipients et/ou supports.

10. Appareil pour le soudage bout à bout de tuyaux, comprenant un premier ensemble de serrage et un deuxième ensemble de serrage, qui s'engagent respectivement sur un premier élément tubulaire et un deuxième élément tubulaire à assembler par soudage ; un dispositif pour fraiser les extrémités desdits premier et deuxième éléments tubulaires et une plaque chauffante (50) pour souder lesdites extrémités étant associés ou associables audit appareil de soudage ; ledit appareil de soudage étant **caractérisé en ce qu'**il comprend au moins un récipient (1) pour plaques chauffantes pour le soudage bout à bout de tuyaux selon une ou plusieurs des revendications précédentes.
